# EUROPÄISCHE PATENTSCHRIFT

(11) **EP 1 800 041 B1**
(45) Veröffentlichungstag und Bekanntmachung des Hinweises auf die Patenterteilung: **04.03.2009**
(21) Anmeldenummer: 05798544.2
(22) Anmeldetag: 11.10.2005
(51) Int. Cl.: F16L 5/04

(54) **VORRICHTUNG ZUR ABDICHTENDEN EINFASSUNG VON ROHR-UND/ODER LEITUNGSSTRÄNGEN**
DEVICE FOR PROVIDING A SEALING COVERING FOR A TRAIN OF PIPES AND/OR DUCTS
SYSTEME POUR INSTALLER DE FAÇON ETANCHE DES LIGNES DE TUBES ET/OU DES FAISCEAUX DE CABLES

(30) Priorität: 12.10.2004 DE 102004049596; 08.09.2005 DE 102005042580
(43) Veröffentlichungstag der Anmeldung: 27.06.2007
(73) Patentinhaber: Deutsche Rockwool Mineralwoll GmbH & Co. OHG, 45966 Gladbeck (DE)
(72) Erfinder: SCHWARK, Martin, 46242 Bottrop (DE); NOWOCZIN, Andreas, 46286 Dorsten (DE)
(74) Vertreter: Stenger, Watzke & Ring
(86) Internationale Anmeldenummer: PCT/EP2005/010922
(87) Internationale Veröffentlichungsnummer: WO 2006/040124

(56) Entgegenhaltungen:
- DE-A1- 2 632 325
- DE-A1- 19 725 301
- DE-A1- 19 905 103
- DE-U1- 9 204 217
- GB-A- 2 203 900

## Beschreibung

Die Erfindung betrifft eine Vorrichtung zur abdichtenden Einfassung von Rohr-und/oder Leitungssträngen in einer Mauer- und/oder Decken- bzw. Bodenöffnung eines Gebäudes, bestehend aus einer die Mauer- und/oder Decken- bzw. Bodenöffnung ausfüllenden Schott, wobei durch das Schott Rohr- und/oder Leitungsstränge geführt sind.

Aus dem Stand der Technik sind derartige Rohrvorrichtungen bekannt siehe beispielsweise die GB 2 203 900 A. Im öffentlichen und Wirtschaftsbau werden häufig die elektrischen Versorgungsleitungen und die Ver- und Entsorgungsrohrleitungen hinter abgehängten Decken oder in Doppelfußböden verlegt. Die elektrischen Versorgungsleitungen, wie Lichtwellen-, Stromversorgungs- und Telekommunikationskabel werden aus Platzmangel häufig auf der Baustelle in Kombination mit Ver- und Entsorgungsrohrleitungen durch einen Wanddurchbruch bzw. Deckendurchbruch von Brandwänden oder Branddecken mit der Feuerwiderstandsklasse F 90 geführt. Derartige Durchbrüche müssen abgeschottet werden, damit im Brandfall weder Feuer noch Rauch in andere Brandabschnitte übertragen wird. Zu diesem Zweck sind Vorrichtungen für Rohrabschottungen von nicht brennbaren und brennbaren Ver- und Entsorgungsleitungen bekannt. Beispielsweise sind Rohrmanschetten im Wanddurchbruchsbereich bekannt, die bei zumindest zwei Seiten des Durchbruchs gehaltert sind. Diese Rohrmanschetten sind im wesentlichen als zwei unterschiedliche Typen bekannt. Eine erste Ausführungsform der Rohrmanschette weist eine vorgespannte Feder auf, die mittels eines Schmelzlotes gesichert ist. Bei bestimmten Temperaturen, die nur bei Brandeinwirkung erreicht werden, verliert das Schmelzlot seine Festigkeit und die vorgespannte Feder zieht einen Metallkeil in das sich erweichende Kunststoffrohr und verschließt somit die Rohröffnung. Eine alternative Ausgestaltung sieht bei Rohrmanschetten vor, dass auf der Innenseite ein sich bei hoher Temperatur nach innen ausdehnendes feuerfestes Blähmaterial angeordnet ist. In beiden Fällen weisen die Rohrmanschetten ein außen liegendes Gehäuse aus Metall auf, dessen Wandstärke ausreichend groß bemessen ist, so dass ein Ausweichen der Rohrmanschetten radial nach außen nicht möglich ist. Innerhalb des Gehäuses sind ferner schalldämmende Schichten vorgesehen, welche eine Übertragung von Körperschallwellen über die Rohrmanschette auf das Bauwerk verhindern sollen. Das feuerfeste Blähmaterial einerseits und das schalldämmende Material andererseits sind als separate Baugruppen, insbesondere ringförmig innerhalb des Gehäuses angeordnet und umgeben ihrerseits die Rohrleitung, die brennbar oder nicht brennbar ausgebildet sein kann. Der Fertigungsaufwand derartiger Rohrmanschetten ist im Hinblick auf den gegliederten Aufbau von Gehäusen, Blähmaterial, vorgespannten Federn, Stahlkeilen sowie schalldämmendem Material nicht unerheblich. Vor allen das aus Festigkeitsgründen aus Metall bestehende Gehäuse erfordert einen erheblichen Fertigungsaufwand und Materialeinsatz, wobei das hohe Gewicht derartiger Rohrmanschetten vor allem bei größeren Rohrdurchmessern hinsichtlich seiner Handhabung nachteilig ist. Ferner stellt auch die Verankerung derartiger Rohrmanschetten im Wanddurchbruch ein Problem dar, da derartige Rohrmanschetten in der Regel mittels Dübeln gehalten werden müssen, wodurch das die Rohrmanschetten umgebende Material eine ausreichende Festigkeit aufweisen muss.

Es ist ferner bekannt, Stahlhüllrohre für die Durchführung von Rohr- und/oder Leitungssträngen durch das Mauerwerk eines Gebäudes zu verwenden. Diese Stahlhüllrohre sind mit Mineralwolle verfüllt. Das hohe Gewicht eines derartigen Stahlhüllrohres erfordert aber erhöhte statische Anforderungen an den das Stahlhüllrohr umgebenden Bereich einer Wand. Um das Stahlhüllrohr zu montieren sind spezielle Aufhänger vor und hinter der Wand vorgesehen, um entsprechend hohe statische Lasten aufzunehmen.

Schließlich ist aus der DE 199 05 103 A1 eine Vorrichtung zur abdichtenden Einfassung von Rohr- und/oder Leitungssträngen in einer Mauer- und/oder Decken- bzw. Bodenöffnung eines Gebäudes, bestehend aus einer den Rohr- und/oder Leitungsstrang ummantelnden Manschette, die bei Brandeinwirkung hitzeresistent und rauchdicht ist. Die Manschette ist als Rohrschale aus Mineralfasem ausgebildet ist und in Achsrichtung sowie in Radialrichtung flexibel, wobei die Mauer-und/oder Decken- bzw. Bodenöffnung mit einem an der Mantelfläche der Manschette anschließenden Schott ausgefüllt wird.

Ausgehen von diesem Stand der Technik liegt der Erfindung die **Aufgabe** zugrunde, eine gattungsgemäße Vorrichtung zu schaffen, die zumindest die Feuerwiderstandsklasse F 90 erreicht, gleichzeitig konstruktiv einfach aufgebaut und somit kostengünstig herstell- sowie einbaubar ist, wobei die Verwendung von Führungseinrichtungen ohne negative Auswirkungen auf die Feuerwiderstandsklasse und die Verarbeitung möglich sein soll.

Die **Lösung** dieser Aufgabenstellung sieht vor, dass die Rohr- und/oder Leitungsstränge in zumindest einer durch das Schott geführten Führungseinrichtung, beispielsweise einer Tragerinne angeordnet sind, dass eine Manschette die Rohr-und/oder Leitungsstränge und die Tragerinne umgibt, die dicht an den Rohr- und/oder Leitungssträngen (3) bzw. der Führungseinrichtung anliegt und dass zwischen dem Schott und einer Außenmantelfläche der Manschette sowie zwischen einer Innenmantelfläche der Manschette und den Rohr- und/oder Leitungssträngen bzw. der Tragerinne zumindest begrenzt elastische Abdichtungselemente angeordnet sind.

Eine erfindungsgemäß ausgebildete Vorrichtung sieht demzufolge vor, dass die Rohr- und/oder Leitungsstränge auf einer Führungseinrichtung, in der Regel einer Tragerinne angeordnet sind. Derartige Führungseinrichtungen, nämlich Tragerinnen sind rinnenförmig ausgebildet und weisen einen U-förmigen Querschnitt auf. Die Führungseinrichtungen bestehen demzufolge aus einem Steg und zwei rechtwinklig zu diesem Steg ausgerichteten Schenkeln, die in gleiche Richtungen ausgerichtet sind.

Die Führungseinrichtung ist durch das Schott geführt. Eine Manschette umgibt die Führungseinrichtung zusammen mit den darin angeordneten Rohr- und/oder Leitungssträngen. Ferner ist vorgesehen, dass zwischen dem Schott und einer Außenmantelfläche der Manschette sowie zwischen einer Innenmantelfläche der Manschette und den Rohr- und/oder Leitungssträngen bzw. der Führungseinrichtung begrenzt elastische Abdichtungselemente angeordnet sind. Insgesamt wird daher eine vollständige Abdichtung einer Mauer- und/oder Decken- bzw. Bodenöffnung eines Gebäudes erzielt, wobei die unterschiedlichen Wärmeausdehnungskoeffizienten der Führungseinrichtung, der Rohr- und/oder Leitungsstränge und der Manschette bzw. der das Schott ausbildenden Materialien durch die begrenzt elastischen Abdichtungselemente ausgeglichen werden können. Eine derartige Vorrichtung zur abdichtenden Einfassung von Rohr- und/oder Leitungssträngen in einer Mauer- und/oder Decken- bzw. Bodenöffnung eines Gebäudes ist daher in einfacher und wirtschaftlicher Weise auch dann aufbaubar, wenn eine Führungseinrichtung durchgeführt wird, wobei hinsichtlich der Anforderungen an die Wärmedämmung und insbesondere an die Feuerwiderstandsfähigkeit hohe Maßstäbe angelegt werden können.

Nach einem weiteren Merkmal der Erfindung ist vorgesehen, dass mehrere, zumindest zwei Rohr- und/oder Leitungsstränge zusammengefasst und von einer die Rohr- und/oder Leitungsstränge zumindest im Bereich des Schotts ummantelnden Manschette umgeben sind. Es kann also ergänzend vorgesehen sein, dass die in der Führungseinrichtung angeordneten Rohr- und/oder Leitungsstränge zusammengefasst und von einer separaten Manschette umgeben sind.

Das Schott besteht vorzugsweise aus ein- oder zweilagigen bzw. mehrlagigen Mineralwolleplatten, die zumindest einseitig mit einem Dämmschichtbildner beschichtet sind. Diese Mineralwolleplatten werden vorzugsweise mit anpassungsfähigem Brandschutzmaterial in die Mauer- und/oder Decken- bzw. Bodenöffnung des Gebäudes eingesetzt, so dass ein dichter Anschluss der Mineralwolleplatten an das Mauerwerk einerseits und an die Rohrschale andererseits vorgesehen ist.

Nach einem weiteren Merkmal der Erfindung ist vorgesehen, dass das Schott auf seinen Stirnflächen mit einem Abdichtungselement, insbesondere mit einem Brandschutzmörtel beschichtet ist. Über dieses Abdichtungselement wird das Schott im Wesentlichen elastisch in der Mauer- und/oder Decken- bzw. Bodenöffnung des Gebäudes gehalten, um insbesondere Volumenschwankungen bei Erwärmung ausgleichen zu können.

Die Mineralwolleplatten des Schotts weisen zumindest auf einer großen Oberfläche eine Kaschierung, beispielsweise aus einer Metall-, vorzugsweise Aluminium-und/oder Kunststofffolie auf. In der Regel ist diese Kaschierung innenliegend im Schott angeordnet, wenngleich auch die Möglichkeit besteht, die Kaschierung oder eine andere Beschichtung außenseitig auf die Mineralwolleplatten des Schotts aufzubringen. Eine derartige Beschichtung kann auch als Haftgrund für einen späteren Putzauftrag dienen.

Die Manschette besteht vorzugsweise aus einem zumindest beschränkt kompressiblen und feuerbeständigen Werkstoff, insbesondere aus einem Mineralfaserelement, vorzugsweise aus Steinwolle. Die Kompressibilität der Manschette ermöglicht eine dichte Anlage der Manschette an den Rohr- und/oder Leitungssträngen bzw. der Führungseinrichtung, so dass das aufzuwendende Abdichtungselement nur in einem geringen Umfang erforderlich ist, um eine vollständige Abdichtung zu erzielen. In gleicher Weise kann die Kompressibilität der Manschette Unregelmäßigkeiten im Bereich der Öffnung im Schott ausgleichen.

Es ist nach einem weiteren Merkmal der Erfindung vorgesehen, dass die Abdichtungselemente zwischen dem Schott und der Manschette und/oder zwischen der Manschette und dem Rohr- und/oder Leitungssträngen und/oder zwischen dem Schott und dem Gebäude aus einem zumindest beschränkt flexiblen und feuerresistenten Material, vorzugsweise aus einem Brandschutzkitt bestehen. Ein Brandschutzkitt ist relativ preiswert und in einfacher Weise zu verarbeiten. Dies kann auch von ungelernten Arbeitskräften baustellenseitig durchgeführt werden. Darüber hinaus härtet der Brandschutzkitt relativ schnell aus, so dass eine entsprechende Vorrichtung schnell fertiggestellt werden kann.

Alternativ kann vorgesehen sein, dass die Abdichtungselemente zwischen dem Schott und der Manschette und/oder zwischen der Manschette und den Rohr-und/oder Leitungssträngen und/oder zwischen dem Schott und dem Gebäude aus einem elastischen Füllstoff, beispielsweise aus Silikon, Acryl und/oder aus Mineralfasem bestehen. Insbesondere können hierbei Massen aus losen Mineralfasern zusammen mit einem feuerbeständigen Bindemittel eingebracht werden, wobei das Bindemittel ebenfalls schnell aushärtet und für eine schnelle Abdichtung des Schotts sorgt.

Eine weitere alternative Ausgestaltung sieht vor, dass die Abdichtungselemente zwischen dem Schott und der Manschette und/oder zwischen der Manschette und den Rohr- und/oder Leitungssträngen und/oder zwischen dem Schott und dem Gebäude aus einem Mörtel oder einem Beton ausgebildet sind. Sowohl Mörtel als auch Beton sind auf den Baustellen problemlos verfügbar, so dass auf besondere Abdichtungselemente in diesem Bereich verzichtet werden kann. Zwar härten Mörtel und/oder Beton sehr schnell zu einem nicht nachgiebigen Element aus, die erforderliche Flexibilität wird aber durch die weiteren Bestandteile der Vorrichtung, insbesondere durch die flexible Manschette und das aus Mineralwolleplatten hergestellte Schott bereitgestellt.

Insgesamt ist vorgesehen, dass die Abdichtungselemente zwischen dem Schott und der Manschette und/oder zwischen der Manschette und den Rohr- und/oder Leitungssträngen und/oder zwischen dem Schott und dem Gebäude kaltrauchdicht ausgebildet sind.

Es hat sich als vorteilhaft erwiesen, die Manschette aus mit Kunstharz gebundener Mineralwolle, beispielsweise Steinwolle und/oder Glaswolle auszuführen, wobei die Mineralwolle einen Schmelzpunkt von mindestens 800° C, insbesondere 900° C und vorzugsweise >1000° C aufweist. Derartige Manschetten sind beispielsweise aus Steinwolle in einfacher und günstiger Weise als Massenprodukt herstellbar, wobei die mit Kunstharz gebundene Mineralwolle mit Rohdichten herstellbar ist, aus denen Manschette mit den erforderlichen Formgebungseigenschaften formbar sind und demzufolge die notwendige Abdichtungsfunktion hinsichtlich der ummantelten Rohr- und Leitungsstränge gewährleisten.

Um eine ausreichende Flexibilität verbunden mit entsprechender Stabilität der Manschetten zu erzielen, hat es sich als vorteilhaft erwiesen, die Manschetten mit einer Dichte zwischen 20 und 600 kg/m³, insbesondere zwischen 20 und 200 kg/m³ herzustellen. Hierbei ist zu beachten, dass mit zunehmender Dichte die Flexibilität der Manschetten verringert wird, so dass in Abhängigkeit des Anwendungsfalls, insbesondere in Abhängigkeit der Ausgestaltung des Schotts eine

Dichte gewählt wird, die eine Kombination der beiderseitigen Anforderungen in vorteilhafter Weise bereitstellt.

Die Manschette besteht im wesentlichen aus Steinwollefasern oder aus einem vergleichbaren Material, insbesondere Glasfasern, Formglas, Vermiculite oder Kalziumsilikat, um den Anforderungen hinsichtlich Brandschutz, Schallschutz und Wärmedämmung mit geringstem Aufwand zu entsprechen.

Die Manschette weist vorzugsweise eine Wandstärke von weniger als 50 mm auf, um bei hoher Flexibilität und insbesondere Biegbarkeit die entsprechenden Anforderungen des Wärmeschutzes zu erfüllen. Manschetten mit einer Wandstärke im Bereich von 30 bis 50 mm kommen dann zur Anwendung, wenn Rohrleitungen beispielsweise für erwärmtes Wasser entsprechend in Wanddurchbrüche zu integrieren sind, um ergänzend wärmedämmend zu wirken, um im Bereich keine Dämmung mit verringert Dämmleistung auszubilden.

Gemäß der Erfindung ist somit vorgesehen, dass mehrere Rohr- und/oder Leitungsstränge in einer Manschette angeordnet sind und dass die Manschette stirnseitig mit einem anpassungsfähigen Abdichtungselement verschlossen ist. Es werden somit erfindungsgemäß mehrere Rohr- und/oder Leitungsstränge zusammengefasst und in einer entsprechend dimensionierten Manschette angeordnet. Hierbei ergibt sich aber in jedem Fall ein verbleibender Hohlraum in der Manschette, so dass bei der Erfindung die Manschette an beiden Stirnseiten zu verschließen ist. Für den Verschluss der Manschette hat sich ein anpassungsfähiges Abdichtungselement als geeignet erwiesen, welches in die verbleibenden Hohlräume stirnseitig in die Manschette einspritzbar und voranstehend beschrieben ist.

Die Rohr- und/oder Leitungsstränge liegen erfindungsgemäß auf vorzugsweise im Querschnitt U-förmig ausgebildeten Führungselementen, sogenannten Tragerinnen auf, um in einem Wanddurchbruch eine im wesentlichen gleichmäßige Verteilung der Rohr- und/oder Leitungsstränge zu erzielen. Derartige Führungselemente können in mehreren Spalten nebeneinander bzw. in mehreren Reihen untereinander angeordnet sein.

Die Mineralwolleplatten des Schotts sind zumindest einseitig mit einer Metall- oder Kunststofffolie, insbesondere mit Aluminium kaschiert und mit einem anpassungsfähigen Abdichtungselement in die Mauer- und/oder Decken- bzw. Bodenöffnung eingesetzt.

Die erfindungsgemäße Vorrichtung zeichnet sich durch eine einfache und funktionsgerechte Konstruktion aus. Die Vorrichtung bildet ein Kabel- bzw. Kombiweichschott aus, welches beispielsweise aus einer oder zwei unbeschichteten oder mit Aluminiumfolie kaschierten Mineralwolleplatten besteht, die in eine entsprechende Öffnung einer Wand des Gebäudes mittels eines Brandschutzkitts eingesetzt werden, wobei die Mineralwolleplatten eine Elastizität haben, die eine einfache Einpassung in die Öffnung ermöglicht. Durch das Schott werden Führungseinrichtungen für Rohr- und/oder Leitungsstränge geführt. Die Rohr- und/oder Leitungsstränge werden gebündelt zusammengelegt und mit einer Manschette umgeben. Die Manschette besteht aus einem zumindest beschränkt kompressiblen und feuerbeständigen Werkstoff, insbesondere aus einem Mineralfaserelement.

Anschließend wird die Führungseinrichtung zusammen mit den bereits ummantelten Rohr- und/oder Leitungssträngen mit einer weiteren Manschette umgeben, wobei die Zwickel zwischen der die Führungseinrichtung umgebenden Manschette und den Außenmantelflächen der die Rohr- und/oder Leitungsstränge umgebenden Manschette mit einem Abdichtungselement ausgefüllt werden. Gleiches gilt hinsichtlich möglicher Zwickel zwischen den Rohr- und/oder Leitungssträngen und der diese umgebenden Manschette.

Als Abdichtungselement hat sich beispielsweise Brandschutzkitt als geeignet erwiesen. Alternativ kann aber auch ein elastischer Füllstoff, wie beispielsweise Silikon, Acryl oder lose Mineralfasern, gegebenenfalls unter Zusetzung eines Bindemittels vorgesehen seien. Die voranstehend genannten Abdichtungselemente führen zu einem kaltrauchdichten Schott im Bereich der durchgeführten Rohr-und/oder Leitungsstränge bzw. Führungseinrichtungen. Ein wesentlicher Vorteil der Erfindung liegt darin, dass gegenüber einem bekannten Weichschott kein

Dämmschichtbildner mehr erforderlich ist, der auf das Schott aufgetragen werden muß. Hierdurch werden Reinigungsarbeiten im Bereich der Rohr- und/oder Leitungsstränge sowie der Führungseinrichtung vermieden. Darüber hinaus sind die Rohr- und/oder Leitungsstränge auch nicht mehr nachträglich mit dem Dämmschichtbildner zu beschichten.

Weitere Merkmale und Vorteile der Erfindung ergeben sich aus der nachfolgenden Beschreibung der zugehörigen Zeichnung, in der bevorzugte Ausführungsformen der Erfindung dargestellt sind. In der Zeichnung zeigen:
- Figur 1: eine erste Ausführungsform einer Vorrichtung zur abdichtenden Einfassung von Rohr- und/oder Leitungssträngen in einer Ansicht;
- Figur 2: die Vorrichtung gemäß Figur 1 in einer geschnitten dargestellten Seitenansicht;
- Figur 3: eine zweite Ausführungsform einer Vorrichtung zur abdichtenden Einfassung von Rohr- und/oder Leitungssträngen in einer Ansicht und
- Figur 4: die Vorrichtung gemäß Figur 3 in einer geschnitten dargestellten Seitenansicht.

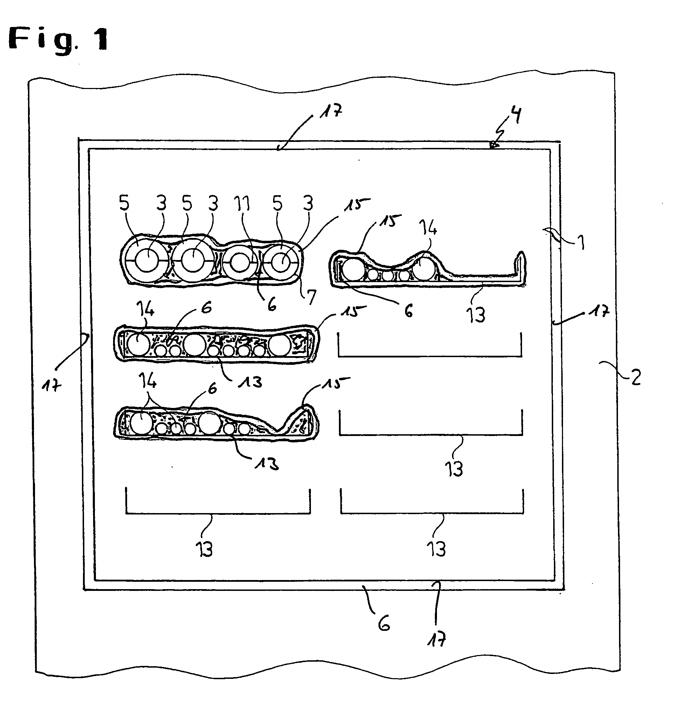

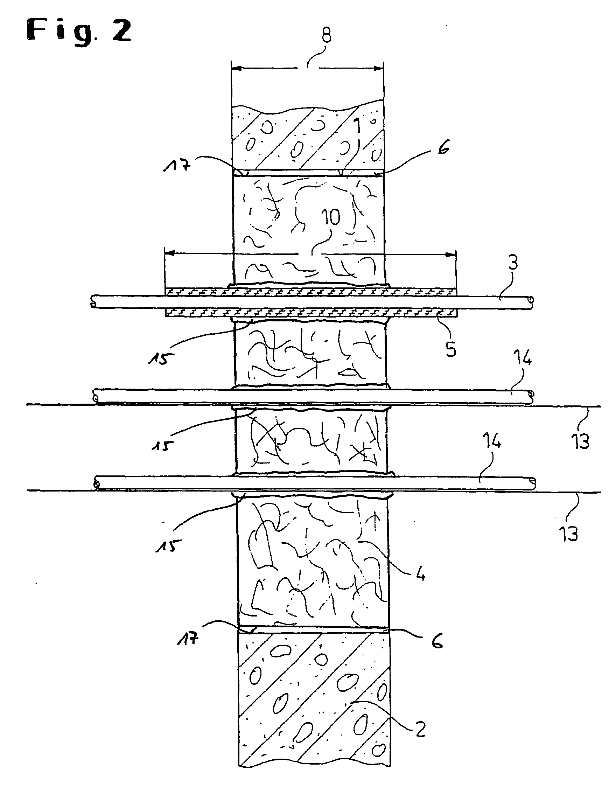

In den Figuren 1 und 2 ist eine erste Ausführungsform einer Vorrichtung zur abdichtenden Einfassung von Rohr- und/oder Leitungssträngen 3 in einer Maueröffnung 1 in der Wand 2 eines Gebäudes dargestellt. Die Vorrichtung besteht aus mehreren Rohr- und Leitungssträngen 3 sowie Elektroleitungen 14, wobei die Rohr- und Leitungsstränge 3 jeweils mit einer Rohrschale 5 aus Mineralfasern ummantelt sind. Die Rohr- und/oder Leitungsstränge 3 und die Elektroleitungen 14 sind durch die Maueröffnung 1 geführt und durchgreifen ein Schott 4 aus einer Mineralwolleplatte.

Die Elektroleitungen 14 sind in Tragerinnen 13 nebeneinander angeordnet, wobei die Tragerinnen 13 das Schott 4 durchgreifen und im Querschnitt U-förmig ausgebildet sind.

Jede Rohrschale 5 ist in Achsrichtung und in Radialrichtung flexibel, so dass eine große Anpassungsfähigkeit der Rohrschalen 5 an die Durchtrittsstellen im Schott 4 besteht. Die Flexibilität der aus Mineralfasem bestehenden Rohrschalen 5 kann beispielsweise durch Walken der Rohrschale 5 bereits bei ihrer Produktion erzielt werden. Darüber hinaus besteht auch die Möglichkeit, die Flexibilität durch eine bestimmte Einstellung der Ausgangskomponenten zueinander, insbesondere des Bindemittels und der Mineralfasern zu erzielen, wobei zu berücksichtigen ist, dass die Flexibilität ausreichend groß sein muss, gleichzeitig aber auch eine ausreichende Stabilität der Rohrschale 5 gegeben sein muss, so dass die notwendigen Voraussetzungen für eine Brandabschottung bei gleichzeitiger Wärmedämmung erzielt werden.

Die Rohrschale 5 besteht aus Steinwolle mit einem Schmelzpunkt >1000° C und einer Dichte von 100 kg/cm³. Die Rohrschale 5 weist eine Materialstärke 9 von mehr als 10 mm auf. Ein durch die Rohrschale 5 bereitgestellter Innendurchmesser 16 ist geringfügig geringer ausgebildet, als der Außendurchmesser des zu ummantelnden Rohr- und/oder Leitungsstranges 3.

Auf der Außenmantelfläche der Rohrschale 5 ist eine flexible Kaschierung 7 angeordnet. Die Kaschierung 7 ist als Feuchtigkeitssperre vorgesehen, um nach der Montage beim Verfüllen der Maueröffnung 1 mit einem geeigneten Abdichtungselement 6 versehen zu werden, ohne dass die dem Abdichtungselement 6 oder auch einem Mörtel innewohnende Feuchtigkeit in die Rohrschale 5 eindringen kann. Bei der Verwendung der Rohrschalen 5 an Frischwasserleitungen mit Mediumstemperaturen unterhalb der Umgebungstemperatur ist die Kaschierung 7 als Aluminiumfolie ausgebildet. In anderen Fällen ist lediglich ein feuchtigkeitsabweisendes Material, beispielsweise eine Kunststofffolie erforderlich. Die Kaschierung 7 weist eine Materialstärke von 0,3 mm auf.

Jede Rohrschale 5 hat eine achsparallel verlaufende Trennstelle 11, so dass jede Rohrschale 5 aufklappbar und über den bereits durch die Maueröffnung 1 geführten und montierten Rohr- bzw. Leitungsstrang 3 gestülpt werden kann. Nachfolgend wird die Trennstelle 11 in geeigneter Weise mit Klebemitteln, Klebeband, Wickeldraht oder dergleichen verschlossen.

Figur 2 zeigt die Vorrichtung gemäß Figur 1 in einer geschnitten dargestellten Seitenansicht. Es ist zu erkennen, dass jede Rohrschale 5 eine Länge 10 aufweist, die größer ist als die Materialstärke 8 der Wand. Ferner ist zu erkennen, dass das Schott 4 die Maueröffnung 1 vollständig mit Ausnahme der durchgeführten Rohr- bzw. Leitungsstränge 3 und Elektroleitungen 14 ausfüllt.

Die in den Tragerinnen 13 angeordneten Elektroleitungen 14 sind von einer Manschette 15 umgeben, wobei die Räume zwischen einer Innenmantelfläche der Manschette 15 und den Außenmantelflächen der Elektroleitungen 14 bzw. der Tragerinne 13 mit dem Abdichtungselement 6 ausgefüllt ist. Die Manschette 15 besteht aus einem Mineralfaserelement, welches eine hohe Biegefähigkeit und Kompressibilität aufweist, so dass sich die Manschette 15 an die Außenmantelflächen der Elektroleitungen 14 und der Tragerinnen 13 anpassen lässt und gleichzeitig auch Volumenveränderungen durch Wärmeeinwirkungen ausgleichen kann.

In gleicher Weise zeigt Figur 1, wie auch Figur 2 die Anordnung einer entsprechenden Manschette 15 im Bereich der mit Rohrschalen 5 bereits umgebenen Rohr- und Leitungsstränge 3, wobei in Figur 1 vier mit Rohrschalen 5 umgebene Rohr- und Leitungsstränge 3 zusammengefasst und mit einer Manschette 15 umgeben sind.

Schließlich ist aus den Figuren 1 und 2 zu erkennen, dass das in die Maueröffnung 1 eingesetzte Schott 4 im Bereich seiner Stirnflächen 17 mit einem Abdichtungselement 6, nämlich einem Brandschutzmörtel beschichtet ist, der die Verbindung zwischen der Wand 2 im Bereich der Maueröffnung 1 und dem Schott 4 herstellt.

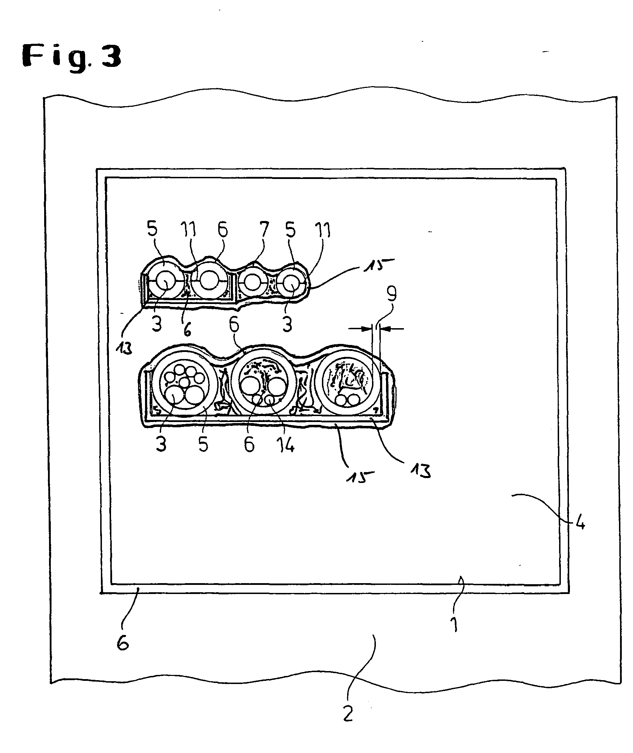

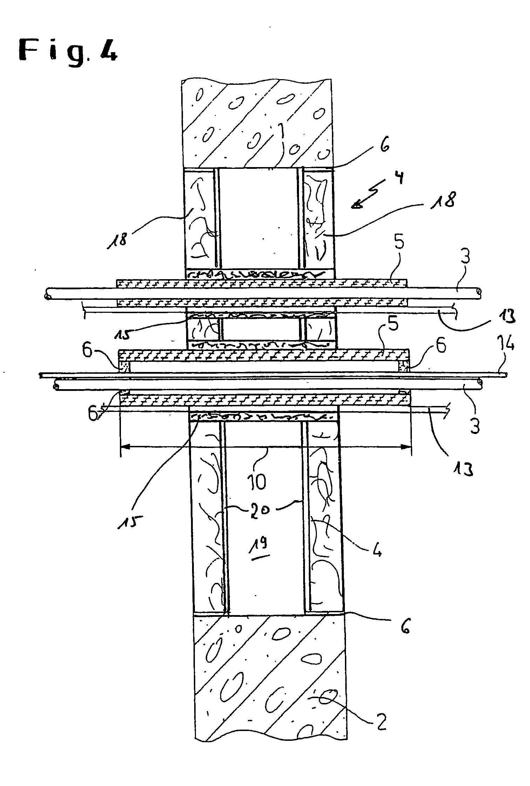

Eine zweite Ausführungsform der Erfindung ist in den Figuren 3 und 4 dargestellt. Diese Ausführungsform unterscheidet sich von der voranstehend dargestellten Ausführungsform gemäß den Figuren 1 und 2 dadurch, dass in einem Teil der Rohrschalen 5 mehrere Rohr- bzw. Leitungsstränge 3 und/oder Elektroleitungen 14 angeordnet sind. Hierbei ergibt sich zwangsläufig ein innerhalb der Manschetten 5 verbleibender Hohlraum, der mit Abdichtungselement 6 im Bereich der stirnseitigen Enden der Rohrschale 5 ausgefüllt ist. Es besteht selbstverständlich auch die Möglichkeit, den gesamten verbleibenden Hohlraum in jeder Rohrschale 5 mit einem Abdichtungselement 6 auszufüllen.

In Übereinstimmung mit den Figuren 1 und 2 ist auch bei der Ausführungsform der erfindungsgemäßen Vorrichtung gemäß den Figuren 3 und 4 vorgesehen, dass eine Manschette 15 die Tragerinne 13 mit den darin angeordneten, von Rohrschalen 5 ummantelten Rohr- bzw. Leitungssträngen 3 und/oder Elektroleitungen 14 umgibt, wobei sich die Manschette 15 im Wesentlichen an die Außenkontur der Tragerinne 13 und der Rohrschalen 5 anlegt. Die verbleibenden Zwickel zwischen der Manschette 15 und den Außenmantelflächen der Rohrschalen 5 bzw. der Tragerinne 13 sind mit einem Abdichtungselement 6 ausgefüllt.

Figur 3 zeigt darüber hinaus auch die Anordnung einer Manschette 15 im Bereich einer Tragerinne 13, in der zwei von jeweils einer Rohrschale 5 ummantelte Rohr- bzw. Leitungsstränge 3 angeordnet sind und zwei daneben angeordnete, ebenfalls von jeweils einer Rohrschale 5 ummantelte Rohr- bzw. Leitungsstränge 3.

In Figur 4 ist ferner zu erkennen, dass das Schott 4 aus zwei beabstandet zueinander angeordneten Mineralwolleplatten 18 besteht, die außenflächenbündig mit der Wand 2 des Gebäudes in der Maueröffnung 1 angeordnet sind. Zwischen den Mineralwolleplatten 18 ist ein Hohlraum 19 ausgebildet. Jede Mineralwolleplatte 18 weist auf ihrer dem Hohlraum 19 zugewandten großen Oberfläche eine Kaschierung 20 in Form einer Aluminiumfolie auf.

In der Figur 4 ist die Ausgestaltung der Manschetten 15 derart dargestellt, dass sich diese durch den Hohlraum 19 über die gesamte Dicke der Wand 2 erstrecken, so dass auch die Manschetten 15 außenflächenbündig mit der Wand 2 ausgebildet sind. Es besteht hiervon abweichend die Möglichkeit, die Manschetten 15 auf eine Länge zu beschränken, die mit der Materialstärke der Mineralwolleplatten 18 übereinstimmt, so dass der Hohlraum 19 frei von Manschetten 15 ist. Durch diese Ausgestaltung wird eine geringere Menge Abdichtungselemente 6, beispielsweise Brandschutzkitt erforderlich.

## Patentansprüche

1. Vorrichtung zur abdichtenden Einfassung von Rohr-und/oder Leitungssträngen (3) in einer Mauer- und/oder Decken- bzw. Bodenöffnung (1) eines Gebäudes, bestehend aus einem die Mauer- und/oder Decken- bzw. Bodenöffnung (1) ausfüllenden Schott (4), wobei durch das Schott (4) Rohr- und/oder Leitungsstränge (3) geführt sind, wobei die Rohr- und/oder Leitungsstränge (3) in zumindest einer durch das Schott (4) geführten Führungseinrichtung, beispielsweise einer Tragerinne (13), angeordnet sind
**dadurch gekennzeichnet,**
**dass** eine Manschette (15) die Rohr- und/oder Leitungsstränge (3) und die Führungseinrichtung umgibt, die dicht an den Rohr- und/oder Leitungssträngen (3) bzw. der Führungseinrichtung anliegt und dass zwischen dem Schott (4) und einer Außenmantelfläche der Manschette (15) sowie zwischen einer Innenmantelfläche der Manschette (15) und den Rohr- und/oder Leitungssträngen (3) bzw. der Führungseinrichtung zumindest begrenzt elastische Abdichtungselemente (6) angeordnet sind.

2. Vorrichtung nach Anspruch 1,
**dadurch gekennzeichnet,**
**dass** mehrere, zumindest zwei Rohr- und/oder Leitungsstränge (3) zusammengefasst und von einer die Rohr- und/oder-Leitungsstränge (3) zumindest im Bereich des Schotts (4) ummantelnden Manschette (15) umgeben sind.

3. Vorrichtung nach Anspruch 1,
**dadurch gekennzeichnet,**
**dass** das Schott (4) aus Mineralwolleplatten (18), vorzugsweise aus ein- oder zweilagigen bzw. mehrlagigen Mineralwolleplatten (18) besteht.

4. Vorrichtung nach Anspruch 1,
**dadurch gekennzeichnet,**
**dass** das Schott (4) auf seinen Stirnflächen (17) mit einem Abdichtungselement (6), insbesondere mit Brandschutzmörtel beschichtet ist.

5. Vorrichtung nach Anspruch 3,
**dadurch gekennzeichnet,**
**dass** die Mineralwolleplatten (18) des Schotts (4).zumindest auf einer großen Oberfläche eine Kaschierung (20), beispielsweise aus einer Metall-, vorzugsweise Aluminium- und/oder Kunststofffolie aufweist.

6. Vorrichtung nach Anspruch 1,
**dadurch gekennzeichnet,**
**dass** die Manschette (15) aus einem zumindest beschränkt kompressiblen und feuerbeständigen Werkstoff, insbesondere aus einem Mineralfaserelement, vorzugsweise aus Steinwolle besteht.

7. Vorrichtung nach Anspruch 1,
**dadurch gekennzeichnet,**
**dass** die Abdichtungselemente (6) zwischen dem Schott (4) und der Manschette (15) und/oder zwischen der Manschette (15) und den Rohr- und/oder Leitungssträngen (3) und/oderzwischen dem Schott (4) und dem Gebäude aus einem zumindest beschränkt flexiblen und feuerresistenten Material, vorzugsweise aus einem Brandschutzkitt bestehen.

8. Vorrichtung nach Anspruch 1,
**dadurch gekennzeichnet,**
**dass** die Abdichtungselemente (6) zwischen dem Schott (4) und der Manschette (15) und/oder zwischen der Manschette (15) und den Rohr- und/oder Leitungssträngen (3) und/oder zwischen dem Schott (4) und dem Gebäude aus einem elastischen Füllstoff, beispielsweise aus Silikon, Acryl und/oder aus Mineralfasem bestehen.

9. Vorrichtung nach Anspruch 1,
**dadurch gekennzeichnet,**
**dass** die Abdichtungselemente (6) zwischen dem Schott (4) und der Manschette (15) und/oder zwischen der Manschette (15) und den Rohr- und/oder Leitungssträngen (3) und/oder zwischen dem Schott (4) und dem Gebäude aus einem Mörtel oder einem Beton ausgebildet sind.

10. Vorrichtung nach Anspruch 1,
**dadurch gekennzeichnet,**
**dass** die Abdichtungselemente (6) zwischen dem Schott (4) und der Manschette (15) und/oder zwischen der Manschette (15) und den Rohr- und/oder Leitungssträngen (3) und/oder zwischen dem Schott (4) und dem Gebäude kaltrauchdicht ausgebildet sind.

11. Vorrichtung nach Anspruch 1,
**dadurch gekennzeichnet,**
**dass** die Manschette (15) eine Wandstärke von ≤ 50 mm aufweist

## Claims

1. Device for providing a sealing covering for a train of pipes and/or ducts (3) in a wall and/or ceiling or floor opening (1) of a building, which device consists of a bulkhead (4) which fills out the wall and/or ceiling or floor opening (1), wherein trains of pipes and/or ducts (3) are passed through the bulkhead, wherein the trains of pipes and/or ducts (3) are arranged in at least one guiding assembly, for instance a supporting channel (13), that is passed through the bulkhead (4),
**characterized in that**
the trains of pipes and/or ducts (3) and the guiding assembly are surrounded by a sleeve (15) which is closely applied against the trains of pipes and/or ducts (3), and that sealing elements (6), which are elastic at least to a limited extent, are arranged between the bulkhead (4) and an outer surface area of the sleeve (15) and between an inner surface area of the sleeve (15) and the trains of pipes and/or ducts (3) or the guiding assembly.

2. Device according to claim 1,
**characterized in that**
**that** several, at least two trains of pipes and/or ducts (3) are combined together and are surrounded by a sleeve (15) which encases the trains of pipes and/or ducts (3) at least in the region of the bulkhead (4).

3. Device according to claim 1,
**characterized in that**
the bulkhead (4) is comprised of mineral wool panels (18), preferably of one, two or multi-ply mineral wool panels (18).

4. Device according to claim 1,
**characterized in that**
the bulkhead (4) is covered on its front faces (17) with a sealing element (6), in particular with fire protection mortar.

5. Device according to claim 3,
**characterized in that**
**that** the mineral wool panels (18) of the bulkhead (4) include on at least one large surface thereof a lamination (20), for instance of metal, preferably of aluminum and/or plastic film.

6. Device according to claim 1,
**characterized in that**
the sleeve (15) is comprised of a fireproof material which is compressible at least to a limited extent, particularly of a mineral fiber element, preferably rock wool.

7. Device according to claim 1,
**characterized in that**
the sealing elements (6) between the bulkhead (4) and the sleeve (15) and/or between the sleeve (15) and the trains of pipes and/or ducts (3) and/or between the bulkhead (4) and the building consist of a fireproof material which is flexible at least to a limited extent, preferably of fire protection cement.

8. Device according to claim 1,
**characterized in that**
the sealing elements (6) between the bulkhead (4) and the sleeve (15) and/or between the sleeve (15) and the trains of pipes and/or ducts (3) and/or between the bulkhead (4) and the building consist of an elastic filler, for instance made from silicone, acrylic and/or from mineral fibers.

9. Device according to claim 1,
**characterized in that**
the sealing elements (6) between the bulkhead (4) and the sleeve (15) and/or between the sleeve (15) and the trains of pipes and/or ducts (3) and/or between the bulkhead (4) and the building are formed from a mortar or a concrete.

10. Device according to claim 1,
**characterized in that**
the sealing elements (6) between the bulkhead (4) and the sleeve (15) and/or between the sleeve (15) and the trains of pipes and/or ducts (3) and/or between the bulkhead (4) and the building are formed in a cold smoke-tight fashion.

11. Device according to claim 1,
**characterized in that**
the sleeve (15) has a wall thickness of ≤ 50 mm.

## Revendications

1. Dispositif pour le bordage étanchant de faisceaux de tuyaux et/ou de conduites (3) dans une ouverture de mur et/ou de plafond ou de sol (1) d'un bâtiment consistant en une cloison étanche (4) qui remplit l'ouverture de mur et/ou de plafond ou de sol (1), des faisceaux de tuyaux et/ou de conduites (3) étant guidés à travers la cloison étanche (4), les faisceaux de tuyaux et/ou de conduites (3) étant placés dans au moins un dispositif de guidage guidé à travers la cloison étanche (4), par exemple dans une goulotte de support (13),
**caractérisé en ce**
**qu'**une manchette (15) entoure les faisceaux de tuyaux et/ou de conduites (3) et le dispositif de guidage qui repose tout contre les faisceaux de tuyaux et/ou de conduite (3) ou le dispositif de guidage et que des éléments d'étanchéité (6) élastiques tout au moins de manière limitée sont placés entre la cloison étanche (4) et une surface d'enveloppe extérieure de la manchette (15) ainsi qu'entre une surface d'enveloppe intérieure de la manchette (15) et les faisceaux de tuyaux et/ou de conduites (3) ou le dispositif de guidage.

2. Dispositif selon la revendication 1,
**caractérisé en ce**
**que** plusieurs faisceaux de tuyaux et/ou de conduites (3), au moins deux, sont réunis et sont entourés par une manchette (15) qui enveloppe les faisceaux de tuyaux et/ou de conduites (3) au moins dans la zone de la cloison étanche (4).

3. Dispositif selon la revendication 1,
**caractérisé en ce**
**que** la cloison étanche (4) est constituée par des panneaux de laine minérale (18), de préférence par des panneaux de laine minérale en une ou deux couches ou en plusieurs couches (18).

4. Dispositif selon la revendication 1,
**caractérisé en ce**
**que** la cloison étanche (4) est revêtue sur ses faces frontales (17) d'un élément d'étanchéité (6), en particulier de mortier ignifuge.

5. Dispositif selon la revendication 3,
**caractérisé en ce**
**que** les panneaux de laine minérale (18) de la cloison étanche (4) présentent, au moins sur une grande surface, une doublure (20), par exemple en une feuille de métal, de préférence une feuille d'aluminium et/ou de matière synthétique.

6. Dispositif selon la revendication 1,
**caractérisé en ce**
**que** la manchette (15) est constituée par un matériau compressible tout au moins de manière limitée et résistant au feu, en particulier par un élément en fibres minérales, de préférence en laine minérale.

7. Dispositif selon la revendication 1,
**caractérisé en ce**
**que** les éléments d'étanchéité (6) entre la cloison étanche (4) et la manchette (15) et/ou entre la manchette (15) et les faisceaux de tuyaux et/ou de conduites (3) et/ou entre la cloison étanche (4) et le bâtiment sont constitués par un matériau flexible tout au moins de manière limitée et résistant au feu, de préférence par un mastic ignifuge.

8. Dispositif selon la revendication 1,
**caractérisé en ce**
**que** les éléments d'étanchéité (6) entre la cloison étanche (4) et la manchette (15) et/ou entre la manchette (15) et les faisceaux de tuyaux et/ou de conduites (3) et/ou entre la cloison étanche (4) et le bâtiment sont constitués par un matériau de remplissage élastique, par exemple en silicone, acrylique et/ou en fibres minérales.

9. Dispositif selon la revendication 1,
**caractérisé en ce**
**que** les éléments d'étanchéité (6) entre la cloison étanche (4) et la manchette (15) et/ou entre la manchette (15) et les faisceaux de tuyaux et/ou de conduites (3) et/ou entre la cloison étanche (4) et le bâtiment sont configurés en mortier ou en béton.

10. Dispositif selon la revendication 1,
**caractérisé en ce**
**que** les éléments d'étanchéité (6) entre la cloison étanche (4) et la manchette (15) et/ou entre la manchette (15) et les faisceaux de tuyaux et/ou de conduites (3) et/ou entre la cloison étanche (4) et le bâtiment sont configurés étanches à la fumée froide.

11. Dispositif selon la revendication 1,
**caractérisé en ce**
**que** la manchette (15) présente une épaisseur de paroi de ≤ 50 mm.
